# EUROPÄISCHE PATENTSCHRIFT

(11) **EP 3 631 962 B1**
(45) Veröffentlichungstag und Bekanntmachung des Hinweises auf die Patenterteilung: **25.08.2021**
(21) Anmeldenummer: 18729900.3
(22) Anmeldetag: 30.05.2018
(51) Int. Cl.: H02M 3/156, H02M 3/335, H02M 1/00

(54) **VERFAHREN ZUM BETRIEB EINES GLEICHSPANNUNGSWANDLERS MIT HOHER EFFIZIENZ MITTELS DYNAMISCHER REGELUNG DER SPULENINDUKTIVITÄT**
METHOD FOR OPERATING A DC VOLTAGE CONVERTER WITH HIGH EFFICIENCY BY MEANS OF DYNAMIC REGULATION OF COIL INDUCTANCE
PROCÉDÉ DE FONCTIONNEMENT D'UN CONVERTISSEUR CONTINU-CONTINU DE HAUTE EFFICACITÉ, PAR RÉGLAGE DYNAMIQUE DE L'INDUCTANCE DE BOBINE

(30) Priorität: 31.05.2017 DE 102017209230
(43) Veröffentlichungstag der Anmeldung: 08.04.2020
(73) Patentinhaber: Universität Stuttgart, 70174 Stuttgart (DE)
(72) Erfinder: ABU MOHAREB, Omar, 70565 Stuttgart (DE); NOAMAN, Qays, Amman 11118 (JO); GRIMM, Michael, 70569 Stuttgart (DE); REUSS, Hans-Christian, 70569 Stuttgart (DE)
(74) Vertreter: Kutzenberger Wolff & Partner
(86) Internationale Anmeldenummer: PCT/EP2018/064224
(87) Internationale Veröffentlichungsnummer: WO 2018/220037

(56) Entgegenhaltungen:
- WO-A1-92/05623
- US-A1- 2002 060 621
- US-A1- 2007 007 935

## Beschreibung

### Stand der Technik

Die vorliegende Erfindung betrifft ein Verfahren zum Betrieb eines Gleichspannungswandlers, der einen Leistungsschalter und eine Spule aufweist, die einen Spulenkern, eine auf dem Spulenkern angeordnete Hauptwicklung und eine auf dem Spulenkern angeordnete Steuerwicklung umfasst.

Gleichspannungswandler (engl. *DC-DC-converter*) ermöglichen das Umsetzen einer am Eingang des Gleichspannungswandlers anliegenden ersten Gleichspannung in eine zweite Gleichspannung am Ausgang des Gleichspannungswandlers. Sie kommen beispielsweise in Batterieladegeräten zur Anwendung.

Eine wichtige Komponente vieler Gleichspannungswandler ist eine Spule, über welche die zwischen dem Eingang und dem Ausgang transferierte Energie zwischengespeichert wird. Derartige Spulen weisen in der Regel eine Induktivität auf, die von dem Mittelwert des von der Spule geführten Stroms abhängig ist. Der Wert der Induktivität beeinflusst die in der Spule auftretenden Leitungsverluste, so dass in Abhängigkeit von dem Betriebspunkt des Gleichspannungswandlers unterschiedlich hohe Leitungsverluste entstehen.

Die US 2006/0 097 711 A1 offenbart einen Gleichspannungswandler mit einem Leistungsschalter und einer Spule, die einen Spulenkern, eine auf dem Spulenkern angeordnete Hauptwicklung und eine auf dem Spulenkern angeordnete Steuerwicklung umfasst, die orthogonal zu der Hauptwicklung vorgesehen ist. Über den Leistungsschalter wird in der Hauptwicklung ein Hauptwicklungsstrom eingestellt, dessen Verlauf derart gewählt wird, dass eine gewünschte Ausgangsspannung am Ausgang des Gleichspannungswandlers erhalten wird. In der Steuerwicklung wird ein Steuerstrom eingestellt, über den die Permeabilität des Spulenkerns und damit die Induktivität der Hauptwicklung eingestellt werden kann. Bei dem bekannten Gleichspannungswandler ist der Steuerstrom der Ausgangsstrom des Gleichspannungswandlers, so dass eine negative Rückkopplung erfolgt, um zu verhindern, dass der Spulenkern mit seiner Sättigungsmagnetisierung betrieben wird, d.h. in einem Zustand, in welchem die Magnetisierung des Spulenkerns durch Erhöhen der magnetischen Feldstärke nicht mehr gesteigert werden kann. Insofern wird ein möglichst hoher Hauptwicklungsstrom in der Hauptwicklung erreicht, ohne den Spulenkern in die Sättigung zu treiben. Allerdings können bei diesem Gleichspannungswandler, insbesondere bei hoher Last, unerwünscht hohe Verluste in der Spule auftreten.

Aus der DE 601 18 161 T2 ist ein Gleichspannungswandler bekannt, der mehrere Leistungsschalter, eine erste Spule mit geringer Induktivität und eine zweite Spule mit hoher Induktivität aufweist. Die zweite Spule umfasst einen Spulenkern, eine auf dem Spulenkern angeordnete Hauptwicklung und mehrere auf dem Spulenkern angeordnete Steuerwicklungen. Eine der Steuerwicklungen kann über einen Steuerschalter wahlweise aktiviert werden, um die Induktivität der Hauptwicklung zu beeinflussen. Im stationären Zustand des Gleichspannungswandlers ist der Steuerschalter geöffnet, so dass die Steuerwicklung keinen Einfluss auf die Induktivität der Hauptwicklung hat. Bei einem schnellen Anstieg des Hauptwicklungsstroms wird der Steuerschalter geschlossen, um die Induktivität der Hauptwicklung zu reduzieren. Insofern wird die Hauptwicklung entweder in Sättigung betrieben oder in einem unkontrollierten Zustand, der abhängig von dem Hauptwicklungsstrom ist. Hierdurch resultieren unerwünscht hohe Verluste in der Spule.

### Offenbarung der Erfindung

Die Aufgabe der vorliegenden Erfindung ist es, die Effizienz des Gleichspannungswandlers zu erhöhen.

Zur Lösung der Aufgabe wird ein Verfahren zum Betrieb eines Gleichspannungswandlers vorgeschlagen, der einen Leistungsschalter und eine Spule aufweist, die einen Spulenkern, eine auf dem Spulenkern angeordnete Hauptwicklung und eine auf dem Spulenkern angeordnete Steuerwicklung umfasst, wobei die Hauptwicklung einen Hauptwicklungsstrom führt, dessen Mittelwert über ein Tastverhältnis des Leistungsschalters derart eingestellt wird, dass entweder ein konstanter Ausgangsstrom oder eine konstante Ausgangsspannung des Gleichspannungswandlers erhalten wird, und wobei die Steuerwicklung einen Steuerstrom führt, der in Abhängigkeit von dem Mittelwert des Hauptwicklungsstroms eingestellt wird, wobei der Steuerstrom über ein Tastverhältnis eines Steuerschalters eingestellt wird.

Bei dem erfindungsgemäßen Verfahren wird über das Tastverhältnis des Leistungsschalters der Mittelwert des Hauptwicklungsstroms in der Hauptwicklung der Spule eingestellt. Die Einstellung des Tastverhältnisses erfolgt derart, dass am Ausgang des Gleichspannungswandlers entweder eine konstante Ausgangsspannung oder ein konstanter Ausgangsstrom erhalten wird. Insofern wird der Gleichspannungswandler entweder in einem Modus mit konstanter Ausgangsspannung (engl. *constant voltage mode, CV mode*) oder in einem Modus mit konstantem Ausgangsstrom (engl. *constant current mode, CC mode*) betrieben. Die Erfindung sieht ferner vor, dass der in der Steuerwicklung geführte Steuerstrom in Abhängigkeit von dem Mittelwert des Hauptwicklungsstroms eingestellt wird. Die Einstellung erfolgt insbesondere derart, dass die Permeabilität des Spulenkerns ihren maximalen Wert einnimmt. Insofern ist es über den Steuerstrom möglich, in jedem Betriebszustand des Gleichspannungswandlers, d.h. für jede Ausgangsspannung oder jedem Ausgangsstrom, unabhängig von der Geometrie der Spule, die Induktivität der Spule auf ihren maximal möglichen Wert einzustellen. Bei maximaler Induktivität der Spule ist die vom Eingang des Gleichspannungswandlers über die Spule zum Ausgang transferierte Energie erhöht und die Leitungsverluste der Spule werden reduziert. Folglich kann die Effizienz des Gleichspannungswandlers, also das Verhältnis der Ausgangsleistung bezogen auf die Eingangsleistung, erhöht werden. Die Effizienz wird dabei durch die Einstellung der Permeabilität des Spulenkerns eingestellt. Die Einstellung des Betriebszustands erfolgt davon unabhängig durch die Einstellung des Tastverhältnisses des Leistungsschalters. Es ist daher möglich, die Effizienz des Gleichspannungswandlers sowohl bei geringer Last als auch bei hoher Last zu erhöhen.

Der Leistungsschalter ist bevorzugt als Halbleiterschalter ausgebildet, besonders bevorzugt als Transistor, beispielsweise als MOS-Transistor. Bevorzugt ist eine Eingangsspannung des Gleichspannungswandlers und/oder eine Schaltfrequenz des Leistungsschalters variabel. Da die Einstellung des Steuerstroms in Abhängigkeit von dem Mittelwert des Hauptwicklungsstroms erfolgt, ist es möglich, für jegliche Eingangsspannung des Gleichspannungswandlers bzw. jegliche Schaltfrequenz des Leistungsschalters die Permeabilität des Spulenkerns auf ihren maximalen Wert einzustellen.

Gemäß einer vorteilhaften Ausgestaltung der Erfindung ist vorgesehen, dass die Hauptwicklung in dem Spulenkern einen magnetischen Hauptfluss erzeugt und die Steuerwicklung in dem Spulenkern einen magnetischen Steuerfluss erzeugt, wobei der Hauptfluss und der Steuerfluss parallel oder antiparallel ausgerichtet sind. Hierdurch kann eine mit reduziertem Aufwand zu realisierende Geometrie der Spule ermöglicht werden. Insbesondere ist es nicht erforderlich, die Steuerwicklung orthogonal zu der Hauptwicklung vorzusehen, so dass eine bauraum- und materialsparende Bauweise des Spulenkerns ermöglicht wird.

Bevorzugt ist es, wenn die Steuerwicklung eine höhere Anzahl an Windungen als die Hauptwicklung aufweist. Der von der Hauptwicklung erzeugte magnetische Hauptfluss und der von der Steuerwicklung erzeugte magnetische Steuerfluss sind proportional zu der jeweiligen Anzahl an Windungen der Hauptwicklung bzw. der Steuerwicklung. Wird die Anzahl der Windungen der Steuerwicklung höher gewählt als die Anzahl der Windungen der Hauptwicklung, so kann der erforderliche Steuerstrom reduziert werden. Hierdurch kann die Effizienz des Gleichspannungswandlers weiter erhöht werden. Das Verhältnis der Anzahl der Windungen der Hauptwicklung bezogen auf die Anzahl der Windungen der Steuerwicklung ist bevorzugt im Bereich zwischen 1 und 0,1, besonders bevorzugt im Bereich zwischen 0,5 und 0,3. Hierbei kann die maximale Anzahl der Windungen durch die Geometrie des Wicklungskerns, auf dem die Hauptwicklung und die Steuerwicklung aufgebracht sind, bedingt und/oder durch die in dem Wicklungskernhervorgerufenen Verlusten.

Bevorzugt weist die Spule genau eine Hauptwicklung und genau eine Steuerwicklung auf. Das bedeutet, dass auf dem Spulenkern der Spule außer der Hauptwicklung und der Steuerwicklung keine weiteren Wicklungen angeordnet sind.

Gemäß der Erfindung ist vorgesehen, dass der Steuerstrom über ein Tastverhältnis eines Steuerschalters eingestellt wird. Der Steuerschalter kann Teil einer Steuerschaltung zur Einstellung der Permeabilität des Spulenkerns sein. Bevorzugt ist der Steuerschalter als Halbleiterschalter ausgebildet, besonders bevorzugt als Transistor, beispielsweise als MOS-Transistor.

In diesem Zusammenhang hat es sich als besonders vorteilhaft erwiesen, wenn das Tastverhältnis des Leistungsschalters über einen ersten Regelkreis eingestellt wird und das Tastverhältnis des Steuerschalters über einen zweiten Regelkreis eingestellt wird, wobei der erste Regelkreis schneller ist als der zweite Regelkreis. Das bedeutet, dass eine erste Zeitkonstante des ersten Regelkreises kleiner ist als eine zweite Zeitkonstante des zweiten Regelkreises. Beispielsweise kann das Verhältnis der ersten Zeitkonstante zu der zweite Zeitkonstante im Bereich zwischen 1 und 0,1, besonders bevorzugt im Bereich zwischen 0,5 und 0,1 gewählt werden. Insofern kann eine Regelung gebildet werden mit einem ersten Regelkreis, der über das Tastverhältnis des Steuerschalters die Ausgangsspannung oder den Ausgangsstrom des Gleichspannungswandlers regelt, und dabei den Hauptwicklungsstrom beeinflusst. Der zweite Regelkreis der Regelung kann in Abhängigkeit von dem Hauptwicklungsstrom das Tastverhältnis des Steuerschalters derart einstellen, dass die Permeabilität des Spulenkerns bzw. die Induktivität der Spule geregelt wird.

Eine vorteilhafte Ausgestaltung sieht vor, dass das Tastverhältnis des Steuerschalters verändert wird, wenn der Gleichspannungswandler einen stationären Betriebszustand eingenommen hat, und dass das Tastverhältnis des Steuerschalters nicht verändert wird, wenn der Gleichspannungswandler den stationären Betriebszustand nicht eingenommen hat. Bevorzugt wird das Tastverhältnis des Steuerschalters verändert, wenn eine Abweichung eines gemessenen Ausgangsstroms von einem Ausgangsstrom-Sollwert einen vorgegebenen ersten Schwellenwert unterschreitet, und das Tastverhältnis wird nicht verändert, wenn die Abweichung den vorgegebenen ersten Schwellenwert überschreitet. Alternativ bevorzugt wird das Tastverhältnis des Steuerschalters verändert, wenn eine Abweichung einer gemessenen Ausgangsspannung von einem Ausgangsspannung-Sollwert einen vorgegebenen ersten Schwellenwert unterschreitet, und das Tastverhältnis wird nicht verändert, wenn die Abweichung den vorgegebenen ersten Schwellenwert überschreitet. Besonders bevorzugt ist es, wenn das Tastverhältnis des Steuerschalters, und damit der Steuerstrom, auf Null gesetzt werden, falls die Abweichung des gemessenen Ausgangsstroms von dem Ausgangsstrom-Sollwert einen vorgegebenen zweiten Schwellenwert überschreitet, der größer als der erste Schwellenwert ist. Alternativ bevorzugt ist es, wenn das Tastverhältnis des Steuerschalters, und damit der Steuerstrom, auf Null gesetzt werden, falls die Abweichung der gemessenen Ausgangsspannung von dem Ausgangsspannung-Sollwert einen vorgegebenen zweiten Schwellenwert überschreitet, der größer als der erste Schwellenwert ist. Auf diese Weise kann verhindert werden, dass der Gleichspannungswandler in einen instabilen Betriebszustand versetzt wird.

Bevorzugt wird das Tastverhältnis des Leistungsschalters in Abhängigkeit von einem gemessen Ausgangsstrom des Gleichspannungswandlers und einem Ausgangsstrom-Sollwert eingestellt, besonders bevorzugt ausschließlich in Abhängigkeit von einem gemessen Ausgangsstrom des Gleichspannungswandlers und einem Ausgangsstrom-Sollwert. Alternativ bevorzugt wird das Tastverhältnis des Leistungsschalters in Abhängigkeit von einer gemessen Ausgangsspannung des Gleichspannungswandlers und einem Ausgangsspannung-Sollwert eingestellt, besonders bevorzugt ausschließlich in Abhängigkeit von einer gemessen Ausgangsspannung des Gleichspannungswandlers und einem Ausgangsspannung-Sollwert.

Das Tastverhältnis des Steuerschalters wird bevorzugt in Abhängigkeit von dem gemessenen Steuerstrom und einem Steuerstrom-Sollwert eingestellt. Der Steuerstrom-Sollwert ist bevorzugt abhängig von dem gemessenen Mittelwert des Hauptwicklungsstroms. Besonders bevorzugt ist der Steuerstrom-Sollwert nicht abhängig von einem gemessen Ausgangsstrom oder einer gemessenen Ausgangsspannung des Gleichspannungswandlers. Vorteilhaft ist es, wenn das Tastverhältnis des Steuerschalters zusätzlich in Abhängigkeit von einer Abweichung eines gemessenen Ausgangsstroms von einem Ausgangsstrom-Sollwert oder in Abhängigkeit von einer Abweichung einer gemessenen Ausgangsspannung von einem Ausgangsspannung-Sollwert eingestellt wird.

Gemäß einer bevorzugten Ausgestaltung der Erfindung ist der Hauptwicklungsstrom ein Eingangsstrom des Gleichspannungswandlers.

Vorteilhaft ist eine Ausgestaltung der Erfindung, bei welcher der Gleichspannungswandler ein Hochsetzsteller (engl. *boost converter, step-up converter*) ist. Der Hochsetzsteller ermöglicht die Wandlung einer kleineren Eingangsspannung in eine höhere Ausgangsspannung. Alternativ ist eine Ausgestaltung bevorzugt, bei welcher der Gleichspannungswandler ein Tiefsetzsteller (engl. *buck converter, step-down converter*) oder ein Hoch-Tiefsetzsteller ist. Bei dem Gleichspannungswandler kann es sich um einen nicht-synchronen Gleichspannungswandler handeln, welcher lediglich einen Leistungsschalter aufweist. Alternativ ist es möglich, dass der Gleichspannungswandler ein synchroner Gleichspannungswandler ist, welcher mehrere, beispielsweise zwei Leistungsschalter umfasst.

Die eingangs gestellte Aufgabe wird ferner gelöst durch eine Schaltungsanordnung mit einem Gleichspannungswandler, der einen Leistungsschalter, einen Steuerschalter und eine Spule aufweist, die einen Spulenkern, eine auf dem Spulenkern angeordnete Hauptwicklung und eine auf dem Spulenkern angeordnete Steuerwicklung umfasst, wobei die Schaltungsanordnung einen Hauptregler aufweist, welcher konfiguriert ist, über ein Tastverhältnis des Leistungsschalters in der Hauptwicklung einen Hauptwicklungsstrom mit einem Mittelwert derart einzustellen, dass entweder ein konstanten Ausgangsstrom oder eine konstante Ausgangsspannung des Gleichspannungswandlers erhalten wird, und wobei die Schaltungsanordnung einen Spulenregler aufweist, welcher konfiguriert ist, in der Steuerwicklung einen Steuerstrom in Abhängigkeit von dem Mittelwert des Hauptwicklungsstroms über ein Tastverhältnis des Steuerschalters einzustellen, insbesondere derart, dass die Permeabilität des Spulenkerns maximal ist.

Bei dem erfindungsgemäßen Gleichspannungswandler können dieselben Vorteile erreicht werden wie sie bereits im Zusammenhang mit der erfindungsgemäßen Verfahren beschrieben worden sind. Ferner können bei dem Gleichspannungswandler auch die vorstehend zusammen mit dem Verfahren beschriebenen vorteilhaften Merkmale allein oder in Kombination Anwendung finden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Fig. 1** zeigt ein Ausführungsbeispiel eines Gleichspannungswandlers gemäß der Erfindung in einem Schaltbild.
Die **Fig. 2** zeigt eine die Spule des Gleichspannungswandlers gemäß Figur 1 in einer schematischen Darstellung.
Die **Fig. 3** zeigt einen typischen Verlauf der magnetischen Flussdichte und der Permeabilität in einem Spulenkern.
Die **Fig. 4** zeigt den Verlauf des Hauptwicklungsstroms des Gleichspannungswandlers gemäß Figur 1.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

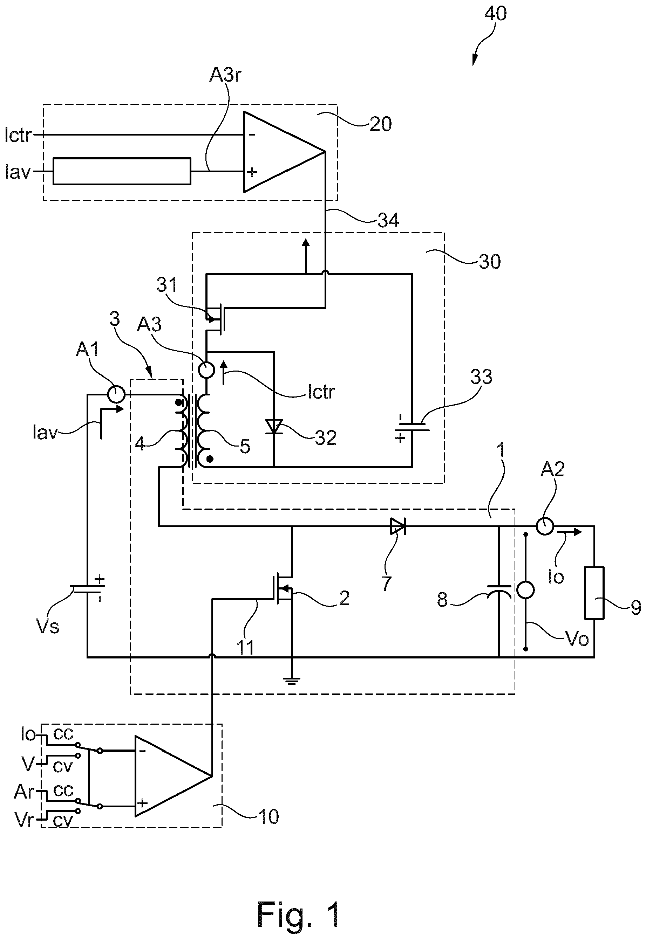

In der **Fig. 1** ist ein Ausführungsbeispiel einer Schaltungsanordnung 40 mit einem Gleichspannungswandler 1 gemäß der Erfindung gezeigt, bei welchem das erfindungsgemäße Verfahren Anwendung finden kann. Der Gleichspannungswandler 1 ist als Hochsetzsteller ausgebildet, der eine Eingangsspannung Vs in eine Ausgangsspannung Vo wandelt, wobei die Ausgangsspannung Vo größer ist als die Eingangsspannung Vs. Der Gleichspannungswandler 1 kann in einem Batterieladegerät eingesetzt werden, über welches eine als Batterie ausgebildete Last 9, beispielsweise eine Batterie eines Smartphones, eines tragbaren Computers oder eines elektrischen Fahrzeugs geladen werden kann.

Der Gleichspannungswandler 1 weist eine Spule 3 mit einer Hauptwicklung 4, einen Leistungsschalter 2, eine Diode 7 sowie einen Kondensator 8 auf. Die Spule 3 ist derart angeordnet, dass ihre Hauptwicklung 4 den Eingangsstrom des Gleichspannungswandlers 1 führt. Der Kondensator 8 ist am Ausgang des Gleichspannungswandlers 1 derart vorgesehen, dass über ihm die Ausgangsspannung Vo abfällt. Insofern glättet der Kondensator 8 die Ausgangsspannung Vo. Durch Schließen des Leistungsschalters 2 kann die Spule 3 selektiv mit der Eingangsspannung Vs beaufschlagt werden, um der Spule Energie zuzuführen. Der Leistungsschalter 2 kann als MOS-Transistor, insbesondere als N-Kanal-MOS-Transistor ausgebildet sein. Die Diode 7 ist nur dann leitend, wenn der Leistungsschalter geöffnet ist 2. Über die Diode 7 kann ein Teil der in der Spule 3 gespeicherten Energie an den Kondensator 8 und die Last 9 abgegeben werden.

Gemäß einer Abwandlung des Ausführungsbeispiels kann die Diode 7 und/oder die Diode 32 durch einen zweiten Leistungsschalter ersetzt werden, so dass ein synchron arbeitender Gleichspannungswandler und/oder eine synchron arbeitende Steuerschaltung erhalten wird.

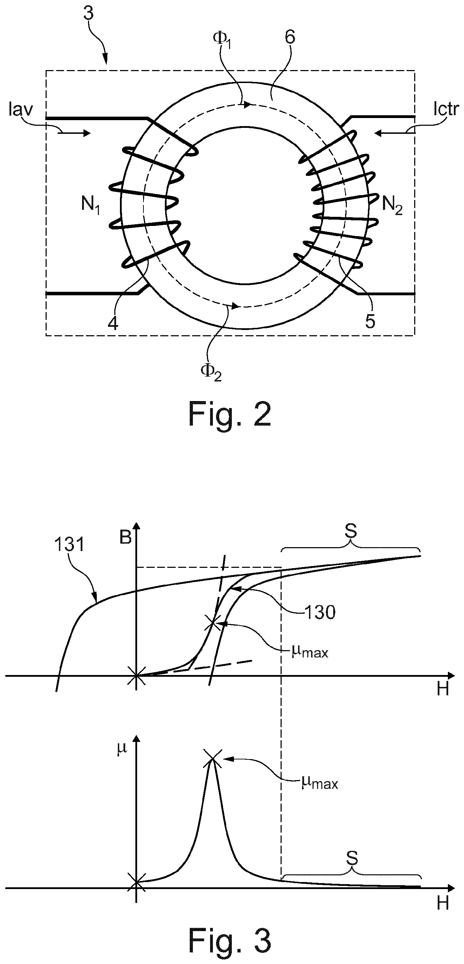

Die Spule 3 ist als Spule mit variabler Induktivität ausgebildet. Die Spule 3 umfasst eine Hauptwicklung 4 und eine Steuerwicklung 5, wobei die Hauptwicklung 4 und die Steuerwicklung 5 auf einem gemeinsamen Spulenkern 6 angeordnet sind. Der Spulenkern 6 ist bevorzugt aus einem ferromagnetischen Material. Die **Fig. 2** zeigt eine schematische Darstellung der Spule 3. Die Hauptwicklung 4 und die Steuerwicklung 5 sind gegenläufig auf dem Spulenkern 6 angeordnet, so dass ein von der Steuerwicklung 5 erzeugter magnetischer Steuerfluss Φ₂ dem von der Hauptwicklung 4 erzeugten Hauptfluss Φ₁ entgegengesetzt ist. Der Steuerfluss Φ₂ und der Hauptfluss Φ₁ sind antiparallel ausgerichtet. Bei dem Gleichspannungswandler 1 gemäß dem Ausführungsbeispiel weist die Hauptwicklung 4 eine erste Anzahl Windungen N₁ und die Steuerwicklung 5 eine zweite Anzahl an Windungen N₂ auf, wobei die zweite Anzahl an Windungen N₂ größer ist als die erste Anzahl an Windungen N₁.

In der **Fig. 3** sind typische Verläufe der magnetischen Flussdichte B und der Permeabilität µ in einem ferromagnetischen Spulenkern 6 dargestellt, der in dem Gleichspannungswandler 1 nach dem Ausführungsbeispiel zum Einsatz kommen kann. Es ist zu erkennen, dass der Spulenkern 6 bei hohen magnetischen Feldstärken H in einen Sättigungsbereich S kommt, in welchem ein weiterer Anstieg der magnetischen Feldstärke H nur einen geringen Anstieg der magnetischen Flussdichte B mit sich bringt. In dem Verlauf der magnetischen Flussdichte B ist zum einen die bei erstmaliger Magnetisierung des Spulenkerns 6 durchlaufende Neukurve 130 zum anderen die beim Ummagnetisieren des Spulenkerns 6 durchlaufene Hysteresekurve 131 gezeigt. Der Verlauf der Permeabilität µ ist für den Fall der erstmaligen Magnetisierung des Spulenkerns 6 gemäß der Neukurve 130 gezeigt. Es ist erkennbar, dass die Permeabilität µ im Wesentlichen der Steigung dB/dH der Neukurve 130 entspricht. Das Maximum der Permeabilität µₘₐₓ liegt in einem Punkt außerhalb des Sättigungsbereichs S. Das bedeutet, dass die maximale Permeabilität µₘₐₓ bei einer magnetischen Feldstärke H gegeben ist, die außerhalb des Sättigungsbereichs S liegt.

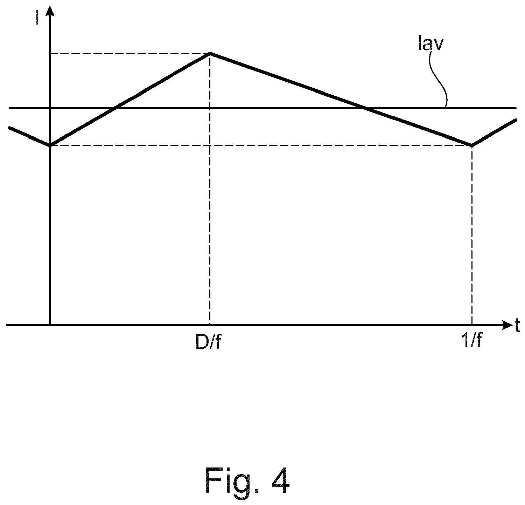

Der Leistungsschalter 2 des in **Fig. 1** gezeigten Gleichspannungswandlers 1 wird über einen Hauptregler 10 angesteuert. Der Hauptregler 10 stellt über ein Tastverhältnis D des Leistungsschalters 2 in der Hauptwicklung 4 einen Hauptwicklungsstrom mit einem Mittelwert lav ein. Die Darstellung in **Fig. 4** zeigt den Verlauf des Hauptwicklungsstroms über eine Periode 1/f mit einer Schaltfrequenz f. Während einer Dauer D/f ist der Leistungsschalter 2 geschlossen. Für die restliche Dauer (1-D)/f der Periode 1/f ist der Leistungsschalter 2 geöffnet. Das Tastverhältnis D ist definiert als das Verhältnis der Zeit D/f, während der der Leistungsschalter 2 geschlossen ist, zu der Periodendauer 1/f.

Der in **Fig. 1** gezeigte Hauptregler 10 kann zwischen einem Modus mit konstantem Ausgangsstrom lo (*constant current, CC*) und einem Modus mit konstanter Ausgangsspannung Vo (*constant voltage,CV*) umgeschaltet werden. Die Einstellung des Tastverhältnisses D des Leistungsschalters 2 erfolgt derart, dass an der Last 9, beispielsweise einer Batterie, entweder ein konstanter Ausgangsstrom lo oder eine konstante Ausgangsspannung Vo erhalten wird. Hierzu erzeugt der Hauptregler 10 ein erstes Steuersignal 11, welches ein Pulsweitenmodulations-Signal (PWM-Signal) ist. In dem Modus mit konstantem Ausgangsstrom lo wird das Tastverhältnis D des Leistungsschalters 2 in Abhängigkeit von dem über einen Stromsensor A2 gemessenen Ausgangsstrom lo des Gleichspannungswandlers 1 und einem Ausgangsstrom-Sollwert Ar eingestellt, besonders bevorzugt ausschließlich in Abhängigkeit von dem gemessen Ausgangsstrom lo und dem Ausgangsstrom-Sollwert Ar. In dem Modus mit konstanter Ausgangsspannung Vo wird das Tastverhältnis D des Leistungsschalters 2 in Abhängigkeit von der gemessen Ausgangsspannung Vo des Gleichspannungswandlers 1 und einem Spannungs-Sollwert Vr eingestellt, besonders bevorzugt ausschließlich in Abhängigkeit von der gemessen Ausgangsspannung Vo und dem Spannungs-Sollwert Vr.

Die Schaltungsanordnung 40 weist ferner eine Steuerschaltung 30 und einen Spulenregler 20 auf, über welche die Permeabilität des Spulenkerns 6 und damit die Induktivität der Spule 3 eingestellt werden kann. Die Steuerschaltung 30 umfasst einen Steuerschalter 31, welcher in Serie mit der Steuerwicklung 5 geschaltet ist. Der Steuerschalter 31 kann als MOS-Transistor, insbesondere als N-Kanal-MOS-Transistor ausgebildet sein. Der Steuerschalter wird über ein zweites Steuersignal 34 angesteuert, welches ein Pulsweitenmodulations-Signal (PWM-Signal) ist. Das zweite Steuersignal 34 wird von den Spulenregler 20 bereitgestellt. Über das Tastverhältnis des Steuerschalters 31 kann insofern der Steuerstrom Ictr in der Steuerwicklung 5 eingestellt werden. Parallel zu der Steuerwicklung 5 ist eine Diode 32 geschaltet, welche nach Art einer Freilaufdiode den Steuerstrom Ictr aufnehmen kann, wenn der Steuerschalter 31 geöffnet ist.

Die Steuerschaltung 30 kann - wie in Fig.1 gezeigt - durch eine Spannungsquelle 33 mit elektrischer Energie versorgt werden. Alternativ kann die Steuerschaltung 30 durch die Eingangsspannung Vs oder die Ausgangsspannung Vo des Gleichspannungswandlers 1 versorgt werden. Bei der Versorgung der Steuerschaltung 30 über die Ausgangsspannung Vo ergibt sich allerdings der Nachteil, dass die zusätzliche Last der Steuerschaltung die Effizienz des Gleichspannungswandlers 1 reduziert.

Das Tastverhältnis des Steuerschalters 31 wird in Abhängigkeit von dem mittels eines Stromsensors A3 gemessenen Steuerstrom Ictr und einem Steuerstrom-Sollwert A3r eingestellt. Der Steuerstrom-Sollwert A3r wird in Abhängigkeit von dem durch einen Stromsensor A1 gemessene Mittelwert lav des Hauptwicklungsstroms gebildet.

Bei der Schaltungsanordnung 40 bildet der Hauptregler 10 einen ersten Regelkreis und der Spulenregler 20 einen zweiten Regelkreis, wobei der erste Regelkreis eine kleinere Zeitkonstante aufweist als der zweite Regelkreis. Das bedeutet, dass der Hauptregler 10 die Ausgangsspannung Vo oder den Ausgangsstrom lo schneller nachregelt als der Spulenregler 20 den Steuerstrom Ictr in der Steuerwicklung 5 regelt. Beispielsweise können der Hauptregler 10 und der Spulenregler 20 in einer getakteten Schaltungsanordnung, beispielsweise in einem Mikrokontroller, implementiert sein, wobei der Ausgangsstrom lo durch den Hauptregler jeweils nach Ablauf einer Abtastperiode nachgestellt wird und der Steuerstrom Ictr durch den Spulenregler 20 jeweils nach einem Vielfachen der Abtastperiode nachgestellt wird. Beispielsweise kann der Steuerstrom Ictr in jeder dritten, vierten oder fünften Abtastperiode des Hauptreglers 10 nachgestellt werden. Ferner ist der Steuerregler 20 derart konfiguriert, dass das Tastverhältnis des Steuerschalters 31 verändert wird, wenn der Gleichspannungswandler 1 einen stationären Betriebszustand eingenommen hat, und dass das Tastverhältnis des Steuerschalters 31 nicht verändert wird, wenn der Gleichspannungswandler 1 den stationären Betriebszustand nicht eingenommen hat. Zur Ermittlung, ob sich der Gleichspannungswandler 1 in einem stationären Betriebszustand befindet, wird die Abweichung des gemessenen Ausgangsstroms lo von dem Ausgangsstrom-Sollwert Ar bzw. die Abweichung der gemessenen Ausgangsspannung Vo von dem Ausgangsspannung-Sollwert Vr ermittelt. Unterschreitet die Abweichung einen vorgegebenen, ersten Schwellenwert, so wird davon ausgegangen, dass sich der Gleichspannungswandler 1 in dem stationären Betriebszustand befindet und das Tastverhältnis des Steuerschalters 31 wird wie zuvor beschrieben verändert. Ist die Abweichung größer oder gleich dem ersten Schwellenwert, so wird das Tastverhältnis des Steuerschalters 31 nicht verändert, d.h. es wird konstant gehalten. Optional kann vorgesehen sein, dass ein zweiter Schwellenwert vorgegeben ist, der größer als der erste Schwellenwert ist. Bei Überschreiten dieses zweiten Schwellenwerts wird das Tastverhältnis des Steuerschalters, und damit der Steuerstrom, auf Null gesetzt, so dass unerwünschte Instabilitäten der Regelung verhindert werden.

Zum Betrieb des vorstehend beschriebenen Gleichspannungswandlers 1 kommt ein Verfahren zur Anwendung über welches die Effizienz des Gleichspannungswandlers in einem beliebigen Betriebspunkt erhöht werden kann. Der Gleichspannungswandler 1 weist neben einem Leistungsschalter 2 eine Spule 3 auf, die einen Spulenkern 6, eine auf dem Spulenkern 6 angeordnete Hauptwicklung 4 und eine auf dem Spulenkern 6 angeordnete Steuerwicklung 5 umfasst. Die Hauptwicklung 4 führt einen Hauptwicklungsstrom, dessen Mittelwert lav über ein Tastverhältnis D des Leistungsschalters 2 derart eingestellt wird, dass entweder ein konstanter Ausgangsstrom lo oder eine konstante Ausgangsspannung Vo des Gleichspannungswandlers 1 erhalten wird. Ferner führt die Steuerwicklung 5 einen Steuerstrom Ictr, der in Abhängigkeit von dem Mittelwert lav des Hauptwicklungsstroms über ein Tastverhältnis des Steuerschalters 31 eingestellt wird. Der Steuerstrom Ictr kann in Abhängigkeit von dem Mittelwert lav des Hauptwicklungsstroms derart eingestellt werden, dass die Permeabilität des Spulenkerns 6 maximal ist. Bei variabler Eingangsspannung und variabler Schaltfrequenz des Leistungsschalters 2 kann die maximal mögliche Induktivität der Spule 3 erreicht werden. Hierdurch werden die Leitungsverluste minimiert und die über die Spule transferierte Energie maximiert. Es ergibt sich ferner der Vorteil, dass die Ausgestaltung, insbesondere die Geometrie, der Spule 3 unabhängig von dem Betriebsverfahren gewählt werden kann.

### Bezugszeichenliste

- 1: Gleichspannungswandler
- 2: Leistungsschalter
- 3: Spule
- 4: Hauptwicklung
- 5: Steuerwicklung
- 6: Spulenkern
- 7: Diode
- 8: Kondensator
- 9: Last
- 10: Hauptregler
- 11: Steuersignal
- 20: Spulenregler
- 30: Steuerschaltung
- 31: Steuerschalter
- 32: Diode
- 33: Spannungsquelle
- 40: Schaltungsanordnung
- 130: Neukurve
- 131: Hysteresekurve
- A1, A2, A3: Stromsensor
- A3r: Steuerstrom-Sollwert
- Ar: Ausgangsstrom-Sollwert
- B: magnetische Flussdichte
- D: Tastverhältnis
- f: Schaltfrequenz
- H: magnetische Feldstärke
- I: Hauptwicklungsstrom
- Iav: Mittelwert des Hauptwicklungsstroms
- Ictr: Steuerstrom
- N₁: erste Windungsanzahl
- N₂: zweite Windungsanzahl
- S: Sättigungsbereich
- t: Zeit
- Vs: Eingangsspannung
- Vo: Ausgangsspannung
- Vr: Ausgangsspannung-Sollwert
- Φ₁: Hauptfluss
- Φ₂: Steuerfluss
- µ: Permeabilität
- µₘₐₓ: maximale Permeabilität

## Patentansprüche

1. Verfahren zum Betrieb eines Gleichspannungswandlers (1), der einen Leistungsschalter (2) und eine Spule (3) aufweist, die einen Spulenkern (6), eine auf dem Spulenkern (6) angeordnete Hauptwicklung (4) und eine auf dem Spulenkern (6) angeordnete Steuerwicklung (5) umfasst,
wobei die Hauptwicklung (4) einen Hauptwicklungsstrom führt, dessen Mittelwert (lav) über ein Tastverhältnis (D) des Leistungsschalters (2) derart eingestellt wird, dass entweder ein konstanter Ausgangsstrom (lo) oder eine konstante Ausgangsspannung (Vo) des Gleichspannungswandlers (1) erhalten wird, und
wobei die Steuerwicklung (5) einen Steuerstrom (Ictr) führt, der in Abhängigkeit von dem Mittelwert (lav) des Hauptwicklungsstroms eingestellt wird,
**dadurch gekennzeichnet, dass**
der Steuerstrom (Ictr) über ein Tastverhältnis eines Steuerschalters (31) eingestellt wird.

2. Verfahren nach Anspruch 1, **dadurch gekennzeichnet, dass** der Steuerstrom (Ictr) derart eingestellt wird, dass die Permeabilität (µ) des Spulenkerns (6) maximal ist.

3. Verfahren nach einem der vorhergehenden Ansprüche, **dadurch gekennzeichnet, dass** die Hauptwicklung (4) in dem Spulenkern (6) einen magnetischen Hauptfluss (Φ₁) erzeugt und die Steuerwicklung (5) in dem Spulenkern (6) einen magnetischen Steuerfluss (Φ₂) erzeugt, wobei der Hauptfluss (Φ₁) und der Steuerfluss (Φ₂) parallel oder antiparallel ausgerichtet sind.

4. Verfahren nach einem der vorhergehenden Ansprüche, **dadurch gekennzeichnet, dass** die Steuerwicklung (5) eine höhere Anzahl an Windungen als die Hauptwicklung (4) aufweist.

5. Verfahren nach einem der vorhergehenden Ansprüche, **dadurch gekennzeichnet, dass** die Spule (3) genau eine Hauptwicklung (4) und genau eine Steuerwicklung (5) aufweist.

6. Verfahren nach einem der vorhergehenden Ansprüche, **dadurch gekennzeichnet, dass** das Tastverhältnis (D) des Leistungsschalters (2) über einen ersten Regelkreis (10) eingestellt wird und das Tastverhältnis des Steuerschalters (31) über einen zweiten Regelkreis (20) eingestellt wird, wobei der erste Regelkreis (10) schneller ist als der zweite Regelkreis (20).

7. Verfahren nach einem der vorhergehenden Ansprüche, **dadurch gekennzeichnet, dass** das Tastverhältnis des Steuerschalters (31) verändert wird, wenn der Gleichspannungswandler (1) einen stationären Betriebszustand eingenommen hat, und dass das Tastverhältnis des Steuerschalters (31) nicht verändert wird, wenn der Gleichspannungswandler (1) den stationären Betriebszustand nicht eingenommen hat.

8. Verfahren nach einem der vorhergehenden Ansprüche, **dadurch gekennzeichnet, dass** das Tastverhältnis (D) des Leistungsschalters (2) in Abhängigkeit von einem gemessen Ausgangsstrom (lo) des Gleichspannungswandlers (1) und einem Ausgangsstrom-Sollwert (Ar) eingestellt wird oder dass das Tastverhältnis des Leistungsschalters in Abhängigkeit von einer gemessen Ausgangsspannung (Vo) des Gleichspannungswandlers (1) und einem Ausgangspannung-Sollwert (Vr) eingestellt wird.

9. Verfahren nach einem der vorhergehenden Ansprüche, **dadurch gekennzeichnet, dass** das Tastverhältnis des Steuerschalters (31) in Abhängigkeit von dem gemessenen Steuerstrom (Ictr) und einem Steuerstrom-Sollwert (A3r) eingestellt wird.

10. Verfahren nach einem der vorhergehenden Ansprüche, **dadurch gekennzeichnet, dass** der Hauptwicklungsstrom ein Eingangsstrom des Gleichspannungswandlers (1) ist.

11. Verfahren nach einem der vorhergehenden Ansprüche, **dadurch gekennzeichnet, dass** der Gleichspannungswandler (1) ein Hochsetzsteller, ein Tiefsetzsteller oder ein Hoch-Tiefsetzsteller ist.

12. Schaltungsanordnung (40) mit einem Gleichspannungswandler (1), der einen Leistungsschalter (2), einen Steuerschalter (31) und eine Spule (3) aufweist, die einen Spulenkern (6), eine auf dem Spulenkern (6) angeordnete Hauptwicklung (4) und eine auf dem Spulenkern (6) angeordnete Steuerwicklung (5) umfasst, wobei die Schaltungsanordnung (40) einen Hauptregler (10) aufweist, welcher konfiguriert ist, über ein Tastverhältnis (D) des Leistungsschalters (2) in der Hauptwicklung (4) einen Hauptwicklungsstrom mit einem Mittelwert (lav) derart einzustellen, dass entweder ein konstanten Ausgangsstrom (lo) oder eine konstante Ausgangsspannung (Vo) des Gleichspannungswandlers (1) erhalten wird,
**dadurch gekennzeichnet, dass** die Schaltungsanordnung (40) einen Spulenregler (20) aufweist, welcher konfiguriert ist, in der Steuerwicklung (5) einen Steuerstrom (Ictr) in Abhängigkeit von dem Mittelwert (lav) des Hauptwicklungsstroms über ein Tastverhältnis des Steuerschalters (31) einzustellen.

## Claims

1. Method for operating a DC-DC converter (1) that has a power switch (2) and a coil (3) that comprises a coil core (6), a main winding (4) arranged on the coil core (6) and a control winding (5) arranged on the coil core (6),
wherein the main winding (4) carries a main winding current, the average value (Iav) of which is set by means of a duty cycle (D) of the power switch (2) in such a way that either a constant output current (Io) or a constant output voltage (Vo) of the DC-DC converter (1) is obtained, and
wherein the control winding (5) carries a control current (Ictr) that is set on the basis of the average value (Iav) of the main winding current,
**characterized in that**
the control current (Ictr) is set by means of a duty cycle of a control switch (31).

2. Method according to Claim 1, **characterized in that** the control current (Ictr) is set in such a way that the permeability (µ) of the coil core (6) is at a maximum.

3. Method according to either of the preceding claims, **characterized in that** the main winding (4) produces a magnetic main flux (φ₁) in the coil core (6) and the control winding (5) produces a magnetic control flux (φ₂) in the coil core (6), wherein the main flux (φ₁) and the control flux (φ₂) are oriented in parallel or antiparallel.

4. Method according to one of the preceding claims, **characterized in that** the control winding (5) has a higher number of turns than the main winding (4).

5. Method according to one of the preceding claims, **characterized in that** the coil (3) has precisely one main winding (4) and precisely one control winding (5).

6. Method according to one of the preceding claims, **characterized in that** the duty cycle (D) of the power switch (2) is set by means of a first control circuit (10) and the duty cycle of the control switch (31) is set by means of a second control circuit (20), wherein the first control circuit (10) is faster than the second control circuit (20).

7. Method according to one of the preceding claims, **characterized in that** the duty cycle of the control switch (31) is altered when the DC-DC converter (1) has assumed a steady operating state, and **in that** the duty cycle of the control switch (31) is not altered when the DC-DC converter (1) has not assumed the steady operating state.

8. Method according to one of the preceding claims, **characterized in that** the duty cycle (D) of the power switch (2) is set on the basis of a measured output current (Io) of the DC-DC converter (1) and an output current setpoint value (Ar), or **in that** the duty cycle of the power switch is set on the basis of a measured output voltage (Vo) of the DC-DC converter (1) and an output voltage setpoint value (Vr).

9. Method according to one of the preceding claims, **characterized in that** the duty cycle of the control switch (31) is set on the basis of the measured control current (Ictr) and a control current setpoint value (A3r).

10. Method according to one of the preceding claims, **characterized in that** the main winding current is an input current of the DC-DC converter (1).

11. Method according to one of the preceding claims, **characterized in that** the DC-DC converter (1) is a step-up converter, a step-down converter or a step-up/step-down converter.

12. Circuit arrangement (40) having a DC-DC converter (1) that has a power switch (2), a control switch (31) and a coil (3) that comprises a coil core (6), a main winding (4) arranged on the coil core (6) and a control winding (5) arranged on the coil core (6), wherein the circuit arrangement (40) has a main regulator (10) that is configured to set a main winding current with an average value (Iav) in the main winding (4) by means of a duty cycle (D) of the power switch (2) in such a way that either a constant output current (Io) or a constant output voltage (Vo) of the DC-DC converter (1) is obtained,
**characterized in that** the circuit arrangement (40) has a coil regulator (20) that is configured to set a control current (Ictr) in the control winding (5) by means of a duty cycle of the control switch (31) on the basis of the average value (Iav) of the main winding current.

## Revendications

1. Procédé pour faire fonctionner un convertisseur de tension continue (1), lequel possède un commutateur de puissance (2) et une bobine (3), laquelle comporte un noyau de bobine (6), un enroulement principal (4) disposé sur le noyau de bobine (6) et un enroulement de commande (5) disposé sur le noyau de bobine (6),
l'enroulement principal (4) conduisant un courant d'enroulement principal dont la valeur moyenne (Iav) est réglée par le biais d'un rapport cyclique (D) du commutateur de puissance (2) de telle sorte qu'on obtient soit un courant de sortie (Io) constant, soit une tension de sortie (Vo) constante du convertisseur de tension continue (1), et
l'enroulement de commande (5) conduisant un courant de commande (Ictr) qui est réglé en fonction de la valeur moyenne (Iav) du courant d'enroulement principal, **caractérisé en ce que**
le courant de commande (Ictr) est réglé par le biais d'un rapport cyclique d'un commutateur de commande (31).

2. Procédé selon la revendication 1, **caractérisé en ce que** le courant de commande (Ictr) est réglé de telle sorte que la perméabilité (µ) du noyau de bobine (6) est maximale.

3. Procédé selon l'une des revendications précédentes, **caractérisé en ce que** l'enroulement principal (4) génère dans le noyau de bobine (6) un flux principal magnétique (Φ₁) et l'enroulement de commande (5) génère dans le noyau de bobine (6) un flux de commande magnétique (Φ₂), le flux principal (Φ₁) et le flux de commande (Φ₂) étant orientés parallèlement ou antiparallèlement.

4. Procédé selon l'une des revendications précédentes, **caractérisé en ce que** l'enroulement de commande (5) possède un nombre de spires supérieur à celui de l'enroulement principal (4).

5. Procédé selon l'une des revendications précédentes, **caractérisé en ce que** la bobine (3) possède exactement un enroulement principal (4) et exactement un enroulement de commande (5).

6. Procédé selon l'une des revendications précédentes, **caractérisé en ce que** le rapport cyclique (D) du commutateur de puissance (2) est réglé par le biais d'un premier circuit de régulation (10) et le rapport cyclique du commutateur de commande (31) est réglé par le biais d'un deuxième circuit de régulation (20), le premier circuit de régulation (10) étant plus rapide que le deuxième circuit de régulation (20).

7. Procédé selon l'une des revendications précédentes, **caractérisé en ce que** le rapport cyclique du commutateur de commande (31) est modifié lorsque le convertisseur de tension continue (1) a adopté un état opérationnel stationnaire, et **en ce que** le rapport cyclique du commutateur de commande (31) n'est pas modifié lorsque le convertisseur de tension continue (1) n'a pas adopté l'état opérationnel stationnaire.

8. Procédé selon l'une des revendications précédentes, **caractérisé en ce que** le rapport cyclique (D) du commutateur de puissance (2) est réglé en fonction d'un courant de sortie (Io) mesuré du convertisseur de tension continue (1) et d'une valeur de consigne de courant de sortie (Ar) ou **en ce que** le rapport cyclique du commutateur de puissance est réglé en fonction d'une tension de sortie (Vo) mesurée du convertisseur de tension continue (1) et d'une valeur de consigne de tension de sortie (Vr).

9. Procédé selon l'une des revendications précédentes, **caractérisé en ce que** le rapport cyclique du commutateur de commande (31) est réglé en fonction du courant de commande (Ictr) mesuré et d'une valeur de consigne du courant de commande (A3r).

10. Procédé selon l'une des revendications précédentes, **caractérisé en ce que** le courant d'enroulement principal est un courant d'entrée du convertisseur de tension continue (1).

11. Procédé selon l'une des revendications précédentes, **caractérisé en ce que** le convertisseur de tension continue (1) est un convertisseur élévateur, un convertisseur abaisseur ou un convertisseur élévateur-abaisseur.

12. Arrangement de circuit (40) comprenant un convertisseur de tension continue (1), lequel possède un commutateur de puissance (2), un commutateur de commande (31) et une bobine (3), laquelle comporte un noyau de bobine (6), un enroulement principal (4) disposé sur le noyau de bobine (6) et un enroulement de commande (5) disposé sur le noyau de bobine (6), l'arrangement de circuit (40) possédant un régulateur principal (10) qui est configuré pour, par le biais d'un rapport cyclique (D) du commutateur de puissance (2), régler dans l'enroulement principal (4) un courant d'enroulement principal ayant une valeur moyenne (Iav) de telle sorte qu'on obtient soit un courant de sortie (Io) constant, soit une tension de sortie (Vo) constante du convertisseur de tension continue (1), et
**caractérisé en ce que** ce l'arrangement de circuit (40) possède un régulateur de bobine (20), lequel est configuré pour régler dans l'enroulement de commande (5) un courant de commande (Ictr) en fonction de la valeur moyenne (Iav) du courant d'enroulement principal par le biais d'un rapport cyclique du commutateur de commande (31) .
